Europäisches Patentamt

European Patent Office

Office européen des brevets

(19)

(11) Publication number: **0 175 579 B1**

## EUROPEAN PATENT SPECIFICATION

(12)

(45) Date of publication of patent specification: **19.11.92** (51) Int. Cl.⁵: **G06F 15/02**

(21) Application number: **85306652.0**

(22) Date of filing: **18.09.85**

(54) **Electronic computer.**

(30) Priority: **18.09.84 JP 197621/84**

(43) Date of publication of application:
**26.03.86 Bulletin 86/13**

(45) Publication of the grant of the patent:
**19.11.92 Bulletin 92/47**

(84) Designated Contracting States:
**DE GB**

(56) References cited:
**GB-A- 2 125 589**

**PATENT ABSTRACTS OF JAPAN, vol. 6, no.
171 (P-140)[1049], 4th September 1982; & JP-
A-57 89 168 (CANON K.K.) 03-06-1982**

(73) Proprietor: **SHARP KABUSHIKI KAISHA
22-22 Nagaike-cho Abeno-ku
Osaka 545(JP)**

(72) Inventor: **Shiraishi, Naoki
492 Minosho-cho
Yamatokoriyama-shi Nara-ken(JP)**

(74) Representative: **Wright, Peter David John et al
R.G.C. Jenkins & Co. 26 Caxton Street
London SW1H 0RJ(GB)**

## Description

The present invention relates to an electronic computer capable of calculating and outputting the results of input formulae in response to the input of data providing numerical values for numerical variables of a formula.

Prior art computers generally require a programme to be written in conjunction with each specific input formula in order for the operator to be prompted to input numerical values corresponding to the numerical variables of the formula. One such computer is described in GB 2,125,589. In this document the calculator provides a facility for adding to or overwriting the prompt characters.

In accordance with the present invention there is provided an electronic computer comprising means for inputting and storing formulae that include numerical variables, means for inputting numerical values of the numerical variables, means for executing automatic computation in accordance with the stored formula and said input numerical values, and means for displaying the result of said computation, characterised in that the electronic computer comprises means for automatically prompting input of the numerical values of said numerical variables to enable the computation means to compute said result.

The computer may also comprise means for distinguishing the numerical variables in the input formula, and display control means. The display control means may cause the display means to display the names identifying the numerical input variables and a name identifying the computational result in a table with the corresponding input numerical values and the value of the computational result, respectively.

The computer may also comprise means for inputting a character term so that the display means displays a name identifying the character term. The characters distinguishing a particular set of input data may then be displayed in table format along with the corresponding numerical variables.

It should be understood, however, that the detailed description and specific examples, while indicating preferred embodiments of the invention, are given by way of illustration only, since various changes and modifications within the scope of the invention will become apparent to those skilled in the art from the detailed description that follows.

The present invention will be better understood with reference to the detailed description and the accompanying drawings included by way of illustration only, and thus are not limitative of the present invention and wherein;

Figure 1 is the simplified schematic diagram of an electronic computer incorporating the preferred embodiments of the present invention;

Figures 2 to 5 are operation flowcharts describing analysis of formulae input in a computer of Figure 1;

Figures 6(a) to 6(g) are typical examples of the series of input prompts seen on the screen of the computer of Figure 1 to induce entry of numerical values corresponding to numerical variables in an input formula.

Figures 7 and 8 are flowcharts describing the sequence of processes involved in computation of a formula after input of the required numerical values.

Features of the electronic computer embodied by the present invention are summarised below.

The electronic computer is designed to display names identifying the input and output variables of a formula, along with numerical values representative of these variables, in table formation. The computer also recognises character terms incorporated in an input statement and provides a character writing column in the table. The character writing term allows identifying information to be output along with a set of numerical values used in computation of a formula.

Referring now to the accompanying drawings, preferred embodiments of the present invention are described below.

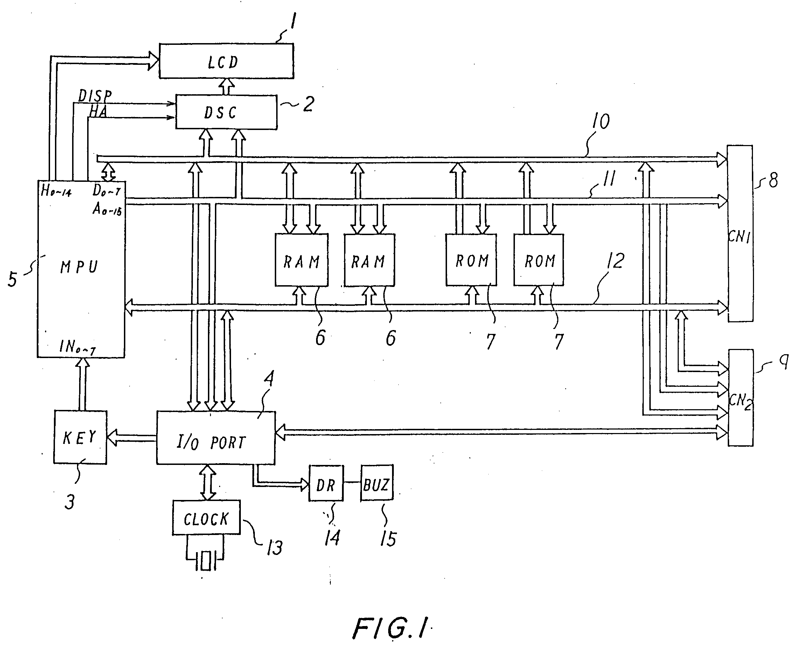

Figure 1 is a simplified schematic diagram of an electronic computer incorporating the preferred embodiments of the present invention. A display unit 1 comprises of liquid crystal display elements. The control circuit 2 controls the character display and the illumination of symbol segments of display 1. The key input unit 3, receives key strobe signals from input/output port 4 and outputs the key-return signal to a microprocessor unit (MPU) 5. Read-write memory (RAM) 6, stores a variety of registers, flags, buffers, and programs and read-only memory 7 (ROM) stores an interpreter that executes programs and other control programs. A connector 8 joins RAM and ROM as modules; these memory means and connectors are also connected to the MPU 5 via data bus 10, address bus 11, and control bus 12.

Another connector 9 joins the I/O devices of tape recorders, printers and other memory means, while this connector is also joined to MPU 5 by means of the above-mentioned buses 10, 11, and 12. I/O port 4 outputs strobe signals to the key input device 3, and simultaneously delivers and receives clock data to and from clock circuit 13. In addition, I/O port 4 also outputs drive signals to drive circuit 14 of buzzer 15. MPU 5 outputs a synchronising signal HA and a display ON/OFF signal DISP to a display controller 22. The MPU

2

5 also outputs backplate signals H0 through H14 to the display unit 1. The display controller 2 incorporates a display memory corresponding to each of the segments of the display 1. Characters and symbols can be displayed on the display unit 1 by writing bit-patterns to the display memory that correspond to desired patterns.

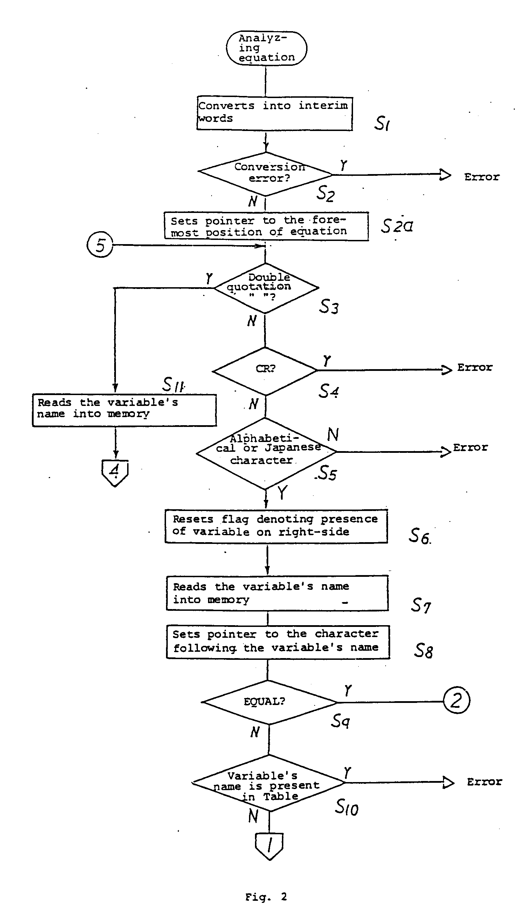

Figures 2 to 5 show the operation flowcharts for analysing an input statement that may include a formula and independent display order inputs. These flowcharts describe system operations that allow the order of display of particular numerical variables to be specified as well as analysing a formula to distinguish the variable denoting the result of the computation and the numerical variables whose values must be input to enable computation to be effected. To understand the manner in which the system of this embodiment operates, let us assume that the user wishes to compute the formula $C = D + B^*2$. In analysis and computation of the formula $C = D + B^*2$ according to one embodiment of the present invention in an input statement, the format of the input statement and the layout of the display table are determined in accordance with the following rules embodied in the flow charts of Figures 2 to 5.

(A) Numerical variables and terms such as B, A, etc to be displayed in a specified order are separated by colons and are input before the formula in the order in which it is desired for them to appear in the display table.

(B) When no order of variables and character terms is specified in the input statement, the numerical variables of the formula (eg. B, D) are arranged from left to right in the table, in the order in which they appear in the formula and the computed result (eg. C) is located at the extreme right of the table. If some variables have an order specified, the first variable encountered in the formula other than those previously having a specified order will appear in the display table on the right hand side of, and immediately next to, the last variable whose position was specified.

(C) Those numerical variables that appear more than once in the input statement, appear only once in the display table in a position corresponding to the first appearance of the variable in the input statement.

(D) The variable designating the result of computation of the formula appears first in the formula followed by an equal sign. (The result of a computation is accordingly referred to in this document as the lefthand side of the formula).

By way of example, let us assume in this case, that the user wishes to display the terms (B, C, D) and the character term (A) in order B, A, D, C from left to right in the table. The user must enter the formula and position information in the following input statement, $B:"A":C = D + B^*2$. That is, the numerical variables and character terms are separated by means of colons in the order of the desired display preceding the formula in the input. It is not necessary to include the variable D before the formula as it will automatically be placed after the character term "A" as it is now the first variable in the formula with no specified position in the table. The double-quotation marks, " ", indicate that A represents a character term. This column is then eliminated from the calculation process so that the characters input in response to a prompt of A are merely displayed. In other words, character terms can be differentiated from numerical variables by placing double quotation marks on either side of the name identifying a character term.

After analysing the input statement including the formula and positioning information $B:"A":C = D + B^*2$ in accordance with the above rules, the sequence of display of the respective terms is determined as shown in Table 1.

The results of computation of the formula on input of the relevant numerical values and information characters are tabulated for display, as shown in Table 2.

3

| | |
|---|---|
| 1 | B |
| 2 | "A" |
| 3 | D |
| 4 | C = |

Table 1

| B | A | D | C |
|---|---|---|---|
| 1 | abcd | 0 | 2 |
| 5 | efg | 10 | 20 |
| 7 | h | 3 | 17 |
| 10 | ijk | 4 | 24 |

Table 2

Referring now to Table 2, the letter A indicates the character term column. This column can be used to provide information on a product, that may represent, for example, an apple (abcd) or an orange (efg). To reverse the display positions of terms C and D, data should be input in the order of B:"A":C:C = D + B*2.

A formula can be computed only after an input statement is analysed into interim words, the formula structure checked, the relevant tables generated with the names of numerical variables and character terms, input of the required data for computation of the formula prompted and the required numerical values of variables input.

The operation of the flowcharts is explained below with reference to Figures 2 to 5. In Figure 2 the functions of a formula written in ASCII code are converted into interim words at step S1. After checking for the presence of errors at step S2, the pointer is set to the beginning of the input statement at step S2A. If the position of the pointer is a double-quoted character, the MPU 5 then determines at step S3 that a character term is present, allowing the system operation to proceed to step S11. If we follow the flow chart assuming the input statement is B:"A":C = D + B*2 by way of example, the first character is not double-quoted and the system operation proceeds to step S4. If the first character was a CR (carriage return), no input information would have been entered and the error mode would therefore be activated at step S4. For our chosen input statement no CR is detected at step S4 and the system proceeds to step S5. At step S5 it is determined whether the character is anything other than an alphabetical or a Japanese character. If it is, an error mode is entered.

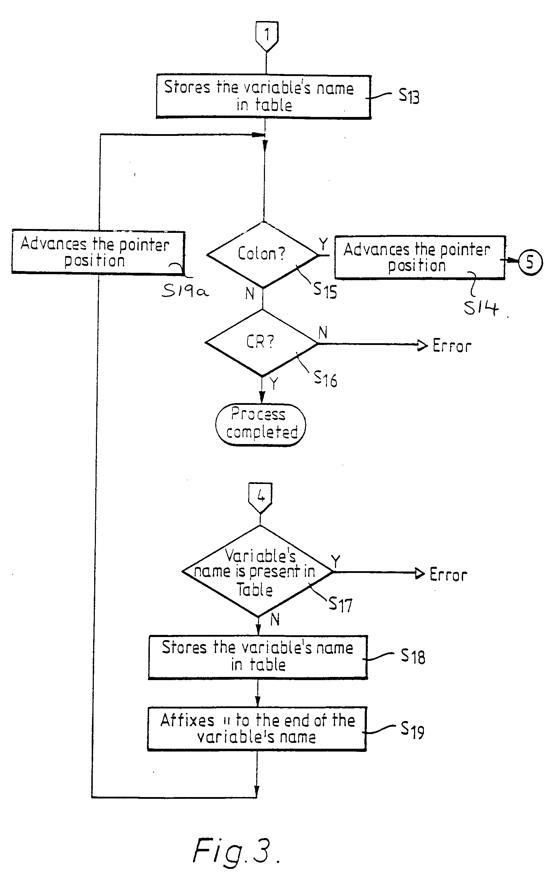

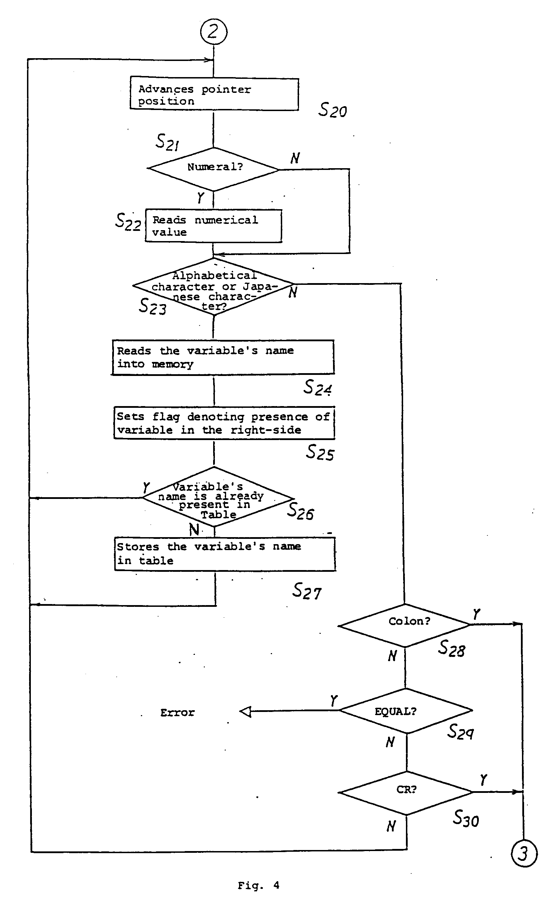

In the present example, however, the first character is the name of a numerical variable, a flag denoting the presence of a numerical variable on the right hand side of the formula is reset at step S6. The name of the numerical variable (B) is stored in the memory temporarily at step S7. At step S8, the pointer is set to the specific character that follows the name of the variable, in this case a colon. The MPU 5 checks to see if the specific character EQUAL is identified at step S9. If the EQUAL is identified, the MPU 5 recognises the start of a formula or equation, causing operation to proceed to terminal 2 of Figure 4. If the EQUAL is not identified, as with our present example, the system operation proceeds to step S10. A determination is made at step S10 as to whether the name of the variable (B) stored temporarily in the memory at step S7 is already present in the table. If the variable is already stored in the table the order specifying commands must have been duplicated, and an error is therefore indicated. If the name of the variable is not present in the table as determined at step S10 and no error is identified, data signals are then sent to terminal 1 of Figure 3 and the process continues. At step S13 the name of the variable is stored in the table, and the

4

operation proceeds to step S15. If at this stage the pointer position indicates a colon, as it would in the present example, the system operation returns to point 5 of Figure 2 to allow continuation of the process. If instead a CR is detected at step S16 this indicates the end of an input statement, and processing is completed. If the character indicated by the pointer is neither a colon nor a CR, an error is indicated.

In the present example, the input continues with a colon, this is determined at step S15 and the process returns to step S3 where the next variable is checked to see if it is surrounded by quotation marks. In the present example, the pointer then indicates the "A". At step S3 the process proceeds, therefore, to step S11 where the name of the variable is read into the memory. The system operation then transfers to point 4 of Figure 3 where a checking operation is executed at step S17 to see if the name of this variable is already present in the table.

If its presence is not identified and no error is accordingly detected, the name of this variable is stored in the table at step S18. Finally, double-quotation marks, designating a character term, are applied at step S19. The system operation then proceeds to step S19a and the pointer is advanced again by one position. The system operation continues with S15 and saves the names of order specifying characters separated by colons until an EQUAL sign is detected at S9.

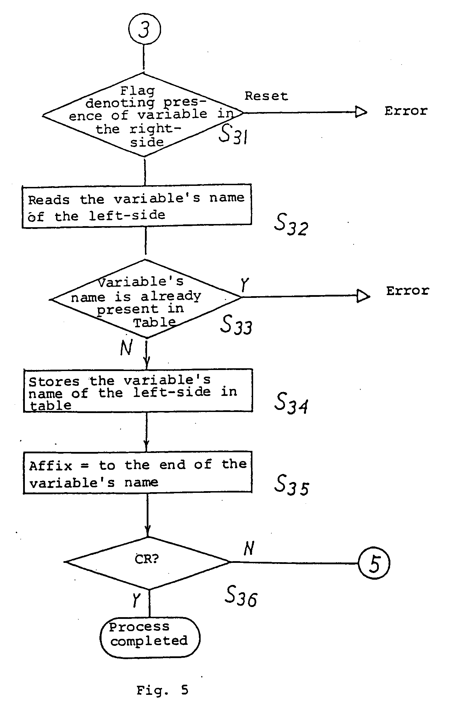

In the present example, from S19 the system proceeds to S19a, S15, S3 to S9 where an EQUAL is detected. The result variable (C) is then stored temporarily in the memory at step S7. The process continues at step S20 of Figure 4 where the pointer position is then advanced by a further position. If the pointer indicates any numeral, the MPU 5 reads this numeral into the memory at step S22 and causes the pointer to proceed to the following position. In the present example the operation proceeds directly from step S21 to step S23. The MPU 5 then checks at step S23 whether the character indicated is either an alphabetical character or a Japanese character. As the character is D in this example, this character is read into the memory at step S24, and a flag is set at step S25 that indicates the presence of a variable on the right-side of the equation. If the name of the variable D has not already been included in the input to specify its position prior to the formula as is the case in this example, that is, its name is found to be absent from the table at step S26, the name of the variable is stored in the table at step S27 and the operation returns to step S20, where the pointer is advanced and the next character examined. In the present example the character is a plus sign ( + ). As step S23, therefore, a name of a variable is not identified. The presence of a colon or a CR is therefore, sought at steps S28 and S30 respectively. If a colon or CR is present, the end of a formula is indicated and the operation proceeds to point 3 of Figure 5. If an EQUAL character is identified at step S29, this must mean that two EQUALs are present in an equation, and the error mode is activated. If neither a colon nor a CR is present, as in the present example, the system operation returns to step S20 and the system proceeds to look at the next character.

This process continues until a colon or CR is identified indicating the end of a formula. Assuming now that each of the variables of the formula C = D + B*2 has been identified and a colon or CR is identified at step S28 or step S30, the system operation then proceeds to step S31 of Figure 5. At this step, whether or not the flag denoting the presence of a variable on the right-side is reset is determined. If this flag has been reset, the system did not pass through step S25 prior to a determination of the end of the formula and there was therefore no numerical variable present on the right-hand side of the input formula. An error determination is made accordingly. If the flag is set, no error is detected, and the name of the variable on the left-side of the formula or equation (C) is read into the memory at step S32, and at step S33, the MPU 5 checks to see if the name of the designated variable is present or absent in the table. If it is already present, the variable has previously been entered during either order specification or as a numerical variable defining the result and an error mode is entered. If the variable has not previously been stored in the table, it is stored in the table at step S34. Finally, an EQUAL ( = ) sign is affixed to the end of the variable's name at step S35 denoting that this variable provides the result of a computation. The system operation then proceeds to step S36, where the MPU 5 identifies whether the character that precipitated entry to terminal 3 was a CR as opposed to a colon. If the previous character was a colon, the input statement still continues and the system operation returns to step S33 to allow further information to be entered.

After analysing the input statement, the MPU 5 extracts each named numerical variable stored and then determines the names and nature of the numerical variables and character terms positions, as shown in Table 1.

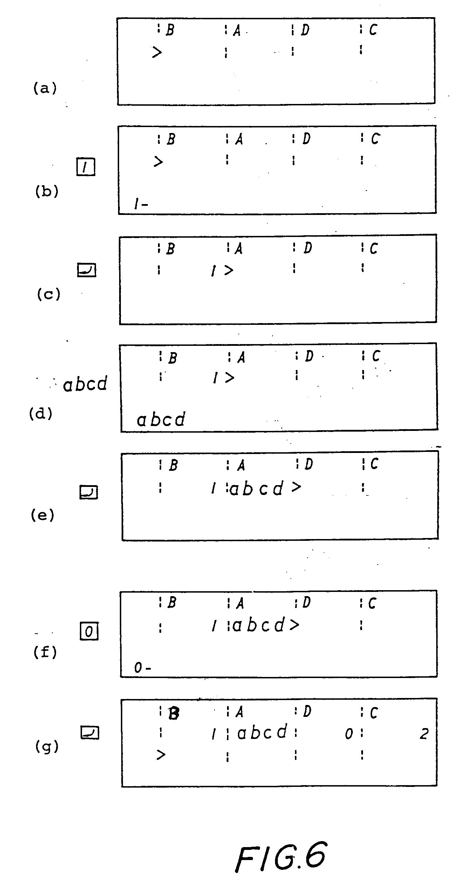

Figure 6 shows some typical examples of display and key operations for inputting data after the entry and analysis of a designated input statement. Firstly, the cursor is displayed below the first numerical variable (B) as shown in Figure 6(a). After entry of numeral 1 as the value of (B) shown in Figure 6(b), this value appears under the first variable at Figure 6(c). Then, the cursor moves to the second position shown in Figure 6(d) indicating the character term (A). If the character array abcd is input to identify this particular set of input data, abcd appears beneath the second character variable. At which time, as shown in Figure 6-

(e), the cursor moves to the third position (D), allowing the entry of a numeral designating the desired value of (D). When the numerical value for (D) is input, all the necessary data for computation of the right-hand side of the equation $C = D + B^*2$ has been provided. The MPU 5 identifies this condition, computes the result of the equation or formula, and allows the result of the formula to be displayed in the fourth position (C), as shown in Figure 6(g).

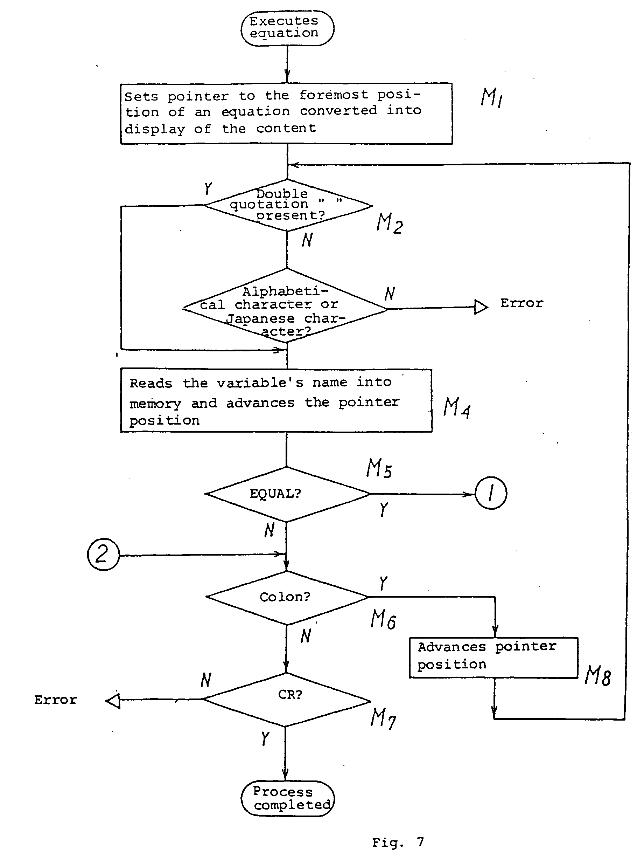

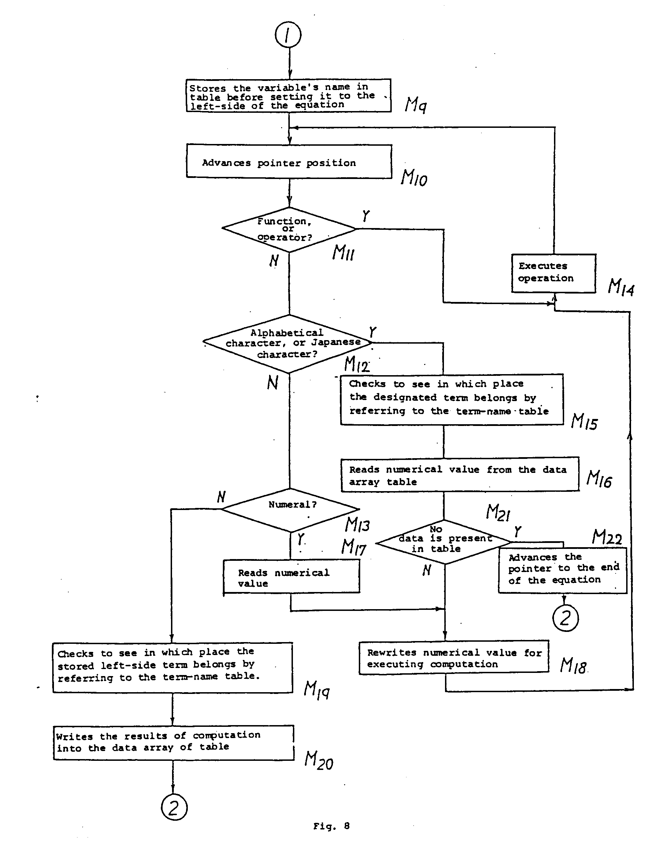

Figures 7 and 8 are flow charts showing the processes effected in response to entry of the return key after completion of entry of the data necessary for computation of a formula. The details are described below.

On entry of all the numerical values necessary for computation of the formula or equation in an input statement, the MPU converts the equation into interim words to be stored as an equation. The pointer is set to the foremost position of the equation. Beginning with the first code a determination is made as to whether the given code is identified as a double-quotation, an alphabetical character or even a Japanese character at steps M2, M3 and M4 respectively. The MPU 5 then reads the name of the variable before advancing the pointer position to the next code of the input statement. If this code is identified to be an EQUAL code, the name of the preceding variable is stored in the memory at step M9 to make up the left-hand side of the equation, and the pointer is moved forward (M → 1 → M9 → M10). The next code is then analysed at steps M11, and/or M12. If this code is a function or operator the system operation proceeds to step M14 when the operation is executed. If, however, the code denotes either an alphabetical character or a Japanese character at step M12, the table is checked by the MPU 5 at step M15 to determine the position in which the variable belongs with reference to the term name table, Table 1, generated on analysis of the input statement. At step M16 the system operation reads the numerical value for the given variable from the data array of Table 2. If the required data is not present in the data array of Table 2 this is detected at step M21 and the system operation proceeds to step M22 where the pointer is advanced to the end of the equation. The operation continues at step M6 where the presence of a colon is detected. The process is completed if no colon is detected and the system proceeds to step M7 where a CR is detected. If a colon is detected at M6 the operation continues at M8 where the pointer is advanced and steps M2 to M4 repeated to look for further characters.

Returning now to step M21, if data is found in Table 2 corresponding to a desired numerical variable, the numerical value is rewritten and the designated computation executed in accordance with specific functions and operators (M18 → M14 → M10 → M11). After the final operation has been executed the result of the computation is obtained. At this stage the N branch will be taken at each of M11, M12 and M13 and the operation proceeds to M19. The MPU 5 then detects at step M19 with reference to Table 1, the position of the left-side term which was stored temporarily at step M9. The result of computation is written to the corresponding position of Table 2 at step M19. The process continues at step M6 where the CR (carriage return) present at the rear end the equation will result in completion of the entire operation at step M7.

The above description refers to an example in which the input statement may include a formula or equation including a number of numerical variables required for computation. The preferred embodiment also enables an input statement including only positioning information, that is no formulae or equations, to generate a display table. This can be achieved by an input statement containing only the character terms "NAME", "ADDRESS", and "TELEPHONE NUMBER" for example. The desired data can then be accessed from a table using an indexing operation merely by referring to the designated character row. This offers the possibility of another advantage for use of this embodiment of the invention as an electronic address and telephone directory.

As is clear from the foregoing, the described electronic computer embodying the present invention incorporates unique functions including the capability of assuming that the variables in a formula present in an input statement are numerical variables, prompting input of numerical values necessary for computation of the formula and then, on entry of the necessary data corresponding to the numerical variables in response to the prompts, allowing the result of the computation (output terms) to be displayed together with the input numerical values. The electronic computer also allows entry of character data so that each set of numerical values for computation of a formula can be independently displayed. An advantageous additional facility of this embodiment allows the optional rearrangement of the displayed variables through the inclusion of positioning information in an input statement. As a result, the display content can be presented in a plurality of arrangements as desired.

## Claims

1. An electronic computer comprising means for inputting and storing formulae that include numerical variables, means (3) for inputting numerical values of the numerical variables, means (5) for executing automatic computation in accordance with the stored formula and said input numerical values, and means (1) for displaying the result of said computation, characterised in that the electronic computer comprises means for automatically prompting input of the numerical values of said numerical variables to enable the computation means to compute said result.

2. An electronic computer according to claim 1 further comprising:
   means for distinguishing said numerical variables in the input formula; and display control means for causing the display means to display the names identifying the numerical input variables and a name identifying said computation result in a table with the corresponding input numerical values and the value of the computation result, respectively.

3. An electronic computer according to claim 2 wherein the display means (1) includes means for displaying the names of the numerical variables in an order independent of the order of their appearance in an input formula.

4. An electronic computer according to any one of claims 1 to 3 comprising means for inputting a character term, the display means being operable to display a name identifying the input character term.

5. An electronic computer according to claim 4 comprising means for inputting characters corresponding to the character term the display means being operable to display the character information.

6. An electronic computer according to claim 5 wherein the display means is operable to display said name identifying the character term and the corresponding characters in said table.

7. An electronic computer according to claim 2 wherein the means for distinguishing also includes means for distinguishing comment information terms and means for prompting input of characters corresponding to the respective character terms.

## Patentansprüche

1. Elektronischer Rechner mit einer Einrichtung zum Eingeben und Speichern von Gleichungen, die Zahlenvariablen beinhalten, einer Einrichtung (3) zum Eingeben von Zahlenwerten für die Zahlenvariablen, einer Einrichtung (5) zum Ausführen einer automatischen Berechnung gemäß der abgespeicherten Gleichung und den eingegebenen Zahlenwerten und einer Einrichtung (1) zum Anzeigen des Ergebnisses der Berechnung, **dadurch gekennzeichnet**, daß der Rechner eine Einrichtung zum automatischen Ausgeben einer Aufforderung zum Eingeben der Zahlenwerte für die Zahlenvariablen aufweist, um die Berechnungseinrichtung in die Lage zu versetzen, das Ergebnis zu berechnen.

2. Elektronischer Rechner nach Anspruch 1, mit einer Einrichtung zum Erkennen der Zahlenvariablen in der eingegebenen Gleichung und mit einer Anzeigesteuereinrichtung, welche die Anzeigeeinrichtung veranlaßt, die Bezeichnungen zur Kennzeichnung der Zahlen-Eingabevariablen sowie des Berechnungsergebnisses in einer Tabelle zusammen mit den jeweils eingegebenen Zahlenwerten bzw. dem Wert des Rechenergebnisses anzuzeigen.

3. Elektronischer Rechner nach Anspruch 2, bei dem die Anzeigeeinrichtung (1) eine Einrichtung zum Darstellen der Bezeichnungen der Zahlenvariablen in einer Reihenfolge aufweist, die unabhängig ist von der Reihenfolge ihres Auftretens in der eingegebenen Gleichung.

4. Elektronischer Rechner nach einem der Ansprüche 1 bis 3, mit einer Einrichtung zum Eingeben eines Zeichenterms, wobei die Anzeigeeinrichtung so betrieben werden kann, daß sie eine Bezeichnung anzeigt, die den eingegebenen Zeichenterm kennzeichnet.

5. Elektronischer Rechner nach Anspruch 4, mit einer Einrichtung zum Eingeben von Zeichen, die dem Zeichenterm entsprechen, wobei die Anzeigeeinrichtung so betrieben werden kann, daß sie die Zeicheninformation anzeigt.

6. Elektronischer Rechner nach Anpsruch 5, bei dem die Anzeigeeinrichtung so betrieben werden kann,

7

daß sie die den Zeichenterm kennzeichnende Bezeichnung und die entsprechenden Zeichen in der Tabelle anzeigt.

7. Elektronischer Rechner nach Anspruch 2, bei dem die Erkennungseinrichtung auch eine Einrichtung zum Erkennen von Kommentarinformationstermen und eine Einrichtung zur Aufforderung der Eingabe von Zeichen aufweist, die den jeweiligen Zeichentermen entsprechen.

**Revendications**

1. Ordinateur électronique comportant des moyens pour introduire et emmagasiner des formules qui comprennent des variables numériques, des moyens (3) pour introduire des valeurs numériques des variables numériques, des moyens (5) pour exécuter un calcul automatique en fonction des formules emmagasinées et desdites valeurs numériques introduites, et des moyens (1) pour afficher le résultat dudit calcul, caractérisé en ce que l'ordinateur électronique comporte des moyens pour solliciter automatiquement l'introduction des valeurs numériques desdites variables numériques pour permettre aux moyens de calcul de calculer ledit résultat.

2. Ordinateur électronique selon la revendication 1, comportant en outre:
des moyens pour distinguer lesdites variables numériques des formules introduites; et des moyens de commande d'affichage pour faire afficher par les moyens d'affichage les noms identifiant les variables numériques introduites et un nom identifiant ledit résultat de calcul dans un tableau avec les valeurs numériques introduites correspondantes et la valeur du résultat du calcul, respectivement.

3. Ordinateur électronique selon la revendication 2 dans lequel les moyens d'affichage (1) comprennent des moyens pour afficher les noms des variables numériques suivant un ordre indépendant de l'ordre de leur apparition dans une formule introduite.

4. Ordinateur électronique selon l'une quelconque des revendications 1 à 3 comportant des moyens pour introduire un terme en forme de caractères, les moyens d'affichage étant aptes à agir pour afficher un nom identifiant le terme en forme de caractères introduit.

5. Ordinateur électronique selon la revendication 4 comportant des moyens pour introduire des caractères correspondant au terme en forme de caractères, les moyens d'affichage étant aptes à agir pour afficher les informations caractères.

6. Ordinateur électronique selon la revendication 5 dans lequel les moyens d'affichage sont aptes à agir pour afficher dans ledit tableau ledit nom identifiant le terme en forme de caractères et les caractères correspondants.

7. Ordinateur électronique selon la revendication 2 dans lequel les moyens de distinction comprennent également des moyens pour distinguer des termes en forme d'informations commentaires et des moyens pour solliciter l'introduction de caractères correspondant aux termes en forme de caractères respectifs.

FIG. I

Fig. 2

Fig.3.

②

```
┌─────────────────────┐
│ Advances pointer    │     S20
│ position            │
└─────────────────────┘
```

S21

Numeral?  N

Y

S22  Reads numerical value

Alphabetical character or Japanese character?  N

S23

Reads the variable's name into memory

S24

Sets flag denoting presence of variable in the right-side

S25

Y  Variable's name is already present in Table  S26

N

Stores the variable's name in table

S27

Colon?  Y

N  S28

Error  ◄  Y  EQUAL?

N  S29

CR?  Y

N  S30

③

Fig. 4

Fig. 5

(a)

(b)

(c)

(d)

(e)

(f)

(g)

FIG.6

Fig. 7

Fig. 8